# EUROPÄISCHE PATENTSCHRIFT

(11) **EP 0 779 021 B1**
(45) Veröffentlichungstag und Bekanntmachung des Hinweises auf die Patenterteilung: **14.11.2001**
(21) Anmeldenummer: 96118873.7
(22) Anmeldetag: 26.11.1996
(51) Int. Cl.: A01D 78/10

(54) **Kreiselschwader**
Rotary swather
Andaineuse rotative

(30) Priorität: 15.12.1995 DE 19546914
(43) Veröffentlichungstag der Anmeldung: 18.06.1997
(73) Patentinhaber: CLAAS SAULGAU GMBH, D-88340 Saulgau (DE)
(72) Erfinder: Geng, Manfred, 88348 Saulgau-Bogenweiler (DE); Deni, Franz, 88348 Saulgau-Bogenweiler (DE)

(56) Entgegenhaltungen:
- EP-A- 0 664 948
- DE-A- 3 418 352
- DE-A- 4 021 812
- DE-U- 9 014 438
- DE-U- 9 114 316
- FR-A- 2 147 578
- FR-A- 2 299 799
- FR-A- 2 663 189
- GB-A- 1 055 438
- NL-A- 6 602 079

## Beschreibung

Die Erfindung bezieht sich auf einen Kreiselschwader nach dem Gattungsbegriff des Patentanspruches 1. Dieser ist abgeleitet aus der DE-OS 41 03 507 und der noch nicht veröffentlichten Patentanmeldung P 44 36 388.5.

Aufgabe der Erfindung ist es, bei einem wenigstens mit drei gestaffelt zueinander angeordneten Schwadkreiseln ausgerüsteten Schwader die mögliche Arbeitsbreite der Maschine unter günstigem Kostenaufwand bei gleichzeitiger Funktionsvielfalt voll und vor allem mit großer Flächenleistung ausnutzen zu können. Bei den bekannten Anordnungen gestaffelter Schwadkreisel war dies nur in geringem Maße möglich.

Die Lösung der Aufgabe wird in dem Vorschlag nach dem kennzeichnenden Teil des Anspruches 1 und in weiterer Ausgestaltung mit der Lehre der Unteransprüche gesehen.

Anhand der Zeichnungen - stets in schematischer Draufsicht auf eine erfindungsgemäße Maschine betrachtet - ist die Erfindung beispielhaft erläutert. Es zeigen:

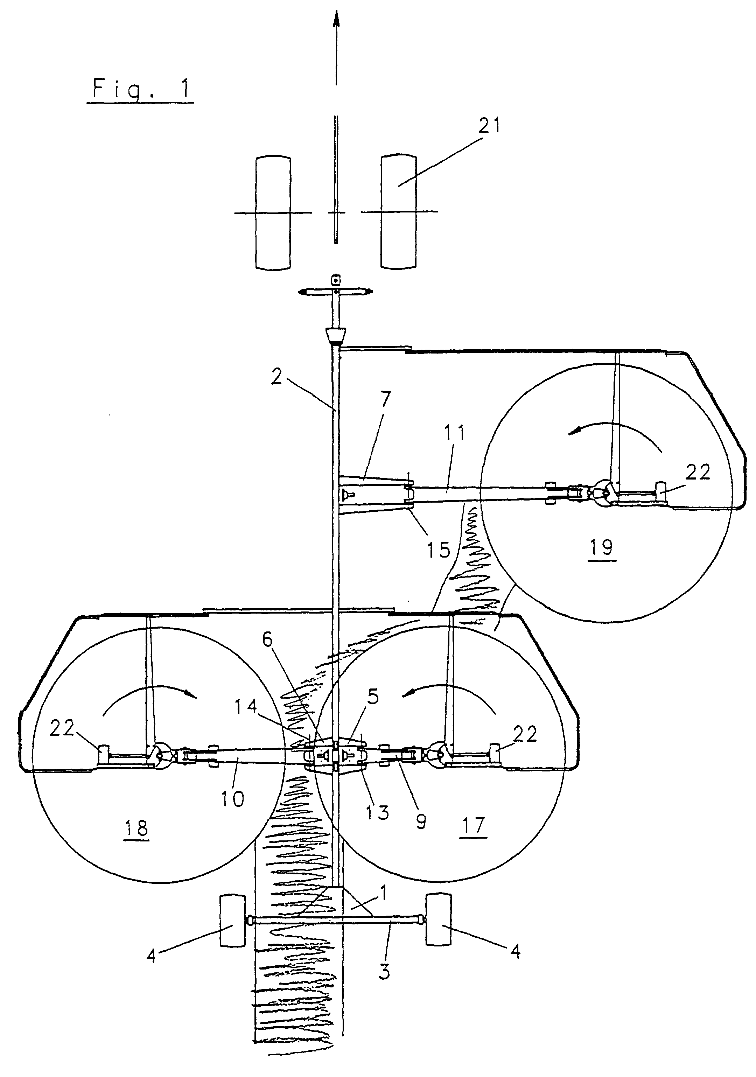

- Fig. 1: den erfindungsgemäßen Schwader mit drei Schwadkreiseln in Arbeitsstellung zur Bildung eines mittig abgelegten Großschwades,

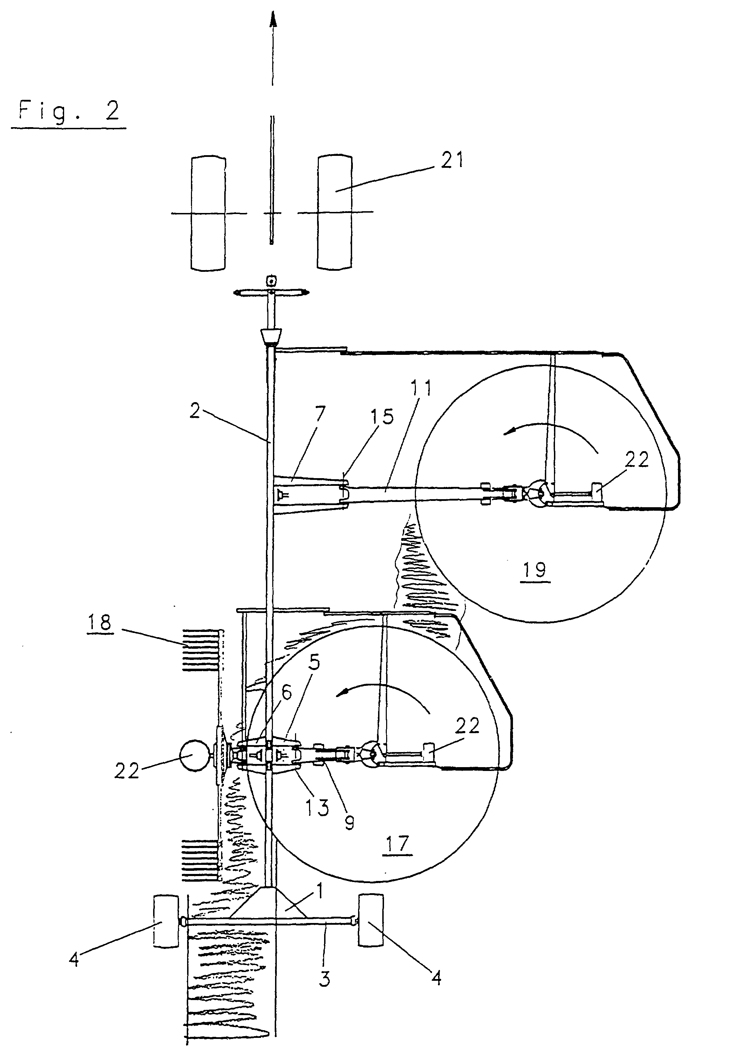

- Fig. 2: den Schwader nach Fig. 1 mit dem hinteren linken Schwadkreisel in Ruhestellung zur Ablage eines Seitenschwades,

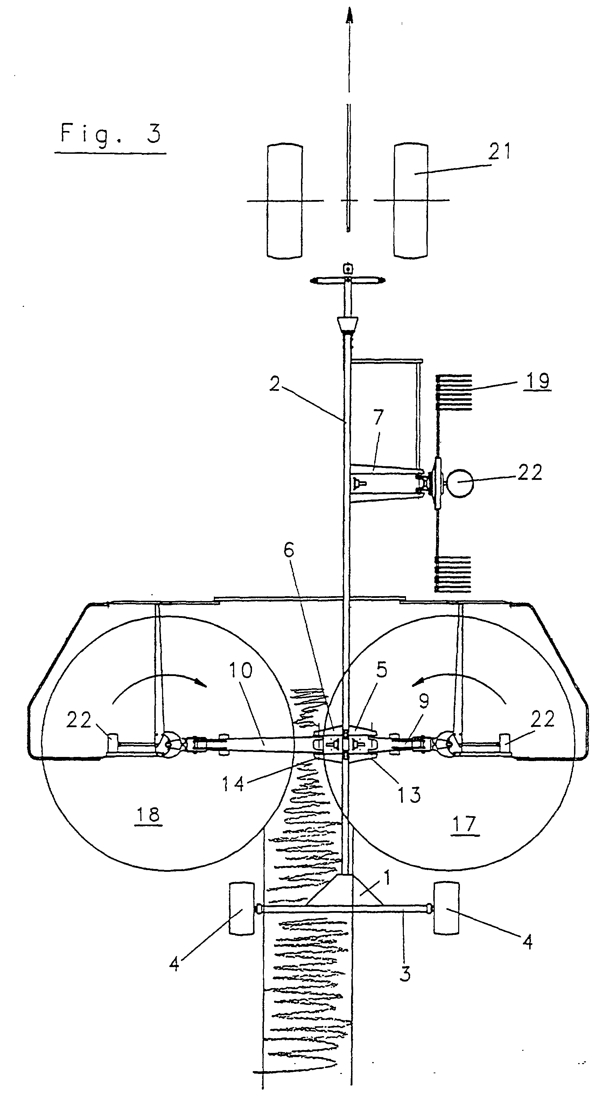

- Fig. 3: den Schwader nach Fig. 1 mit dem vorderen Schwadkreisel in Ruhestellung zur Mittenschwadablage,

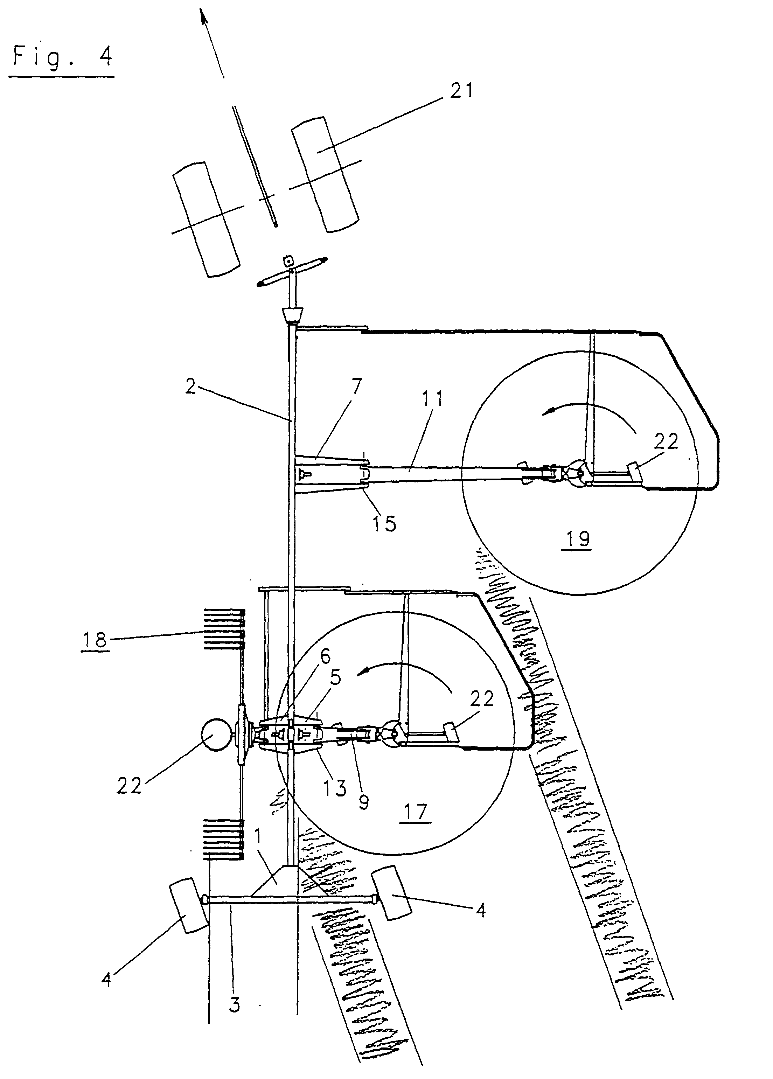

- Fig. 4: den Schwader nach Fig. 1 mit dem hinteren linken Schwadkreisel in Ruhestellung und schräggestellten Laufrädern zur Bildung von zwei kleineren Schwaden,

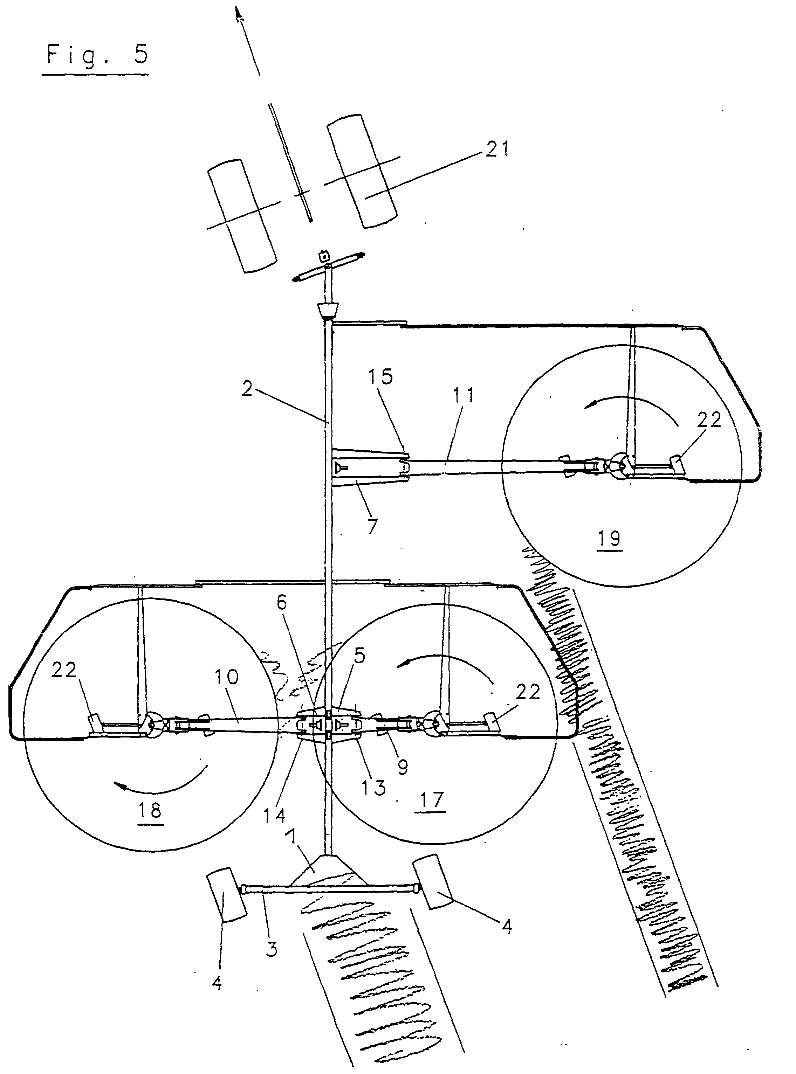

- Fig. 5: den Schwader nach Fig. 1 mit allen drei Schwadkreiseln in Arbeitsstellung und schräggestellten Laufrädern zur Bildung zweier Schwaden unterschiedlicher Größe,

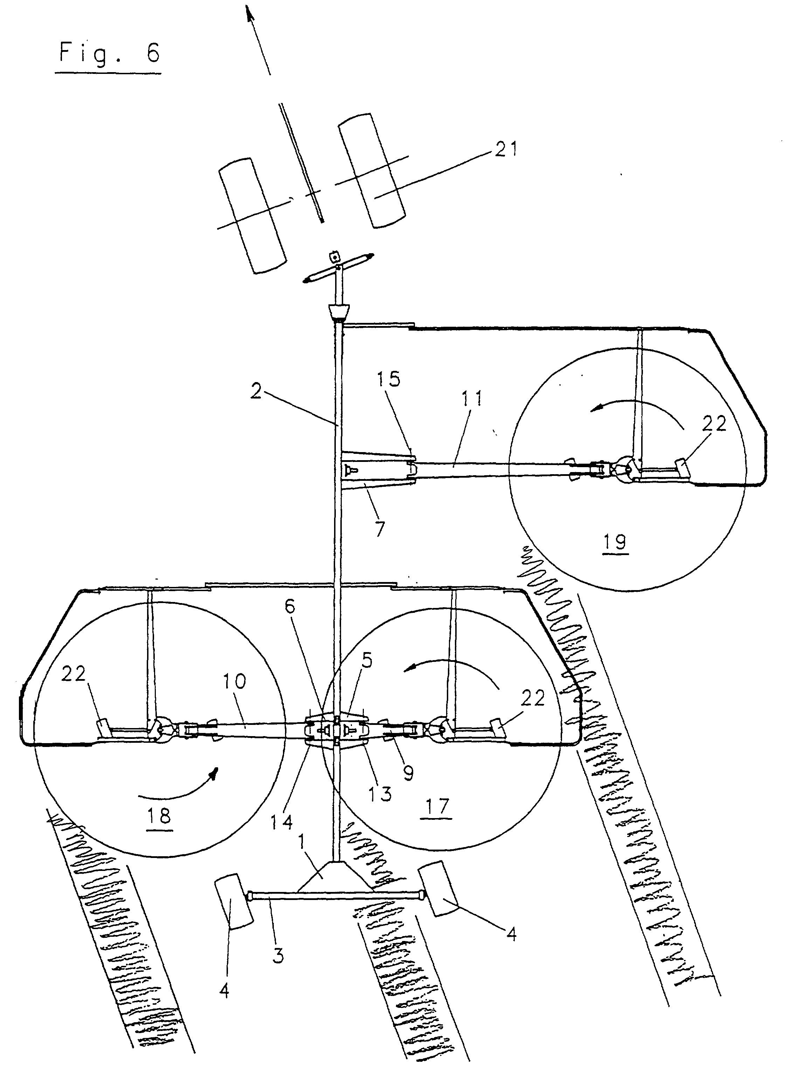

- Fig. 6: den Schwader nach Fig. 1 mit allen drei Schwadkreiseln in Arbeitsstellung, schräggestellten Laufrädern und gleicher Drehrichtung der beiden hinteren Schwadkreisel zur Bildung von drei kleineren Schwaden,

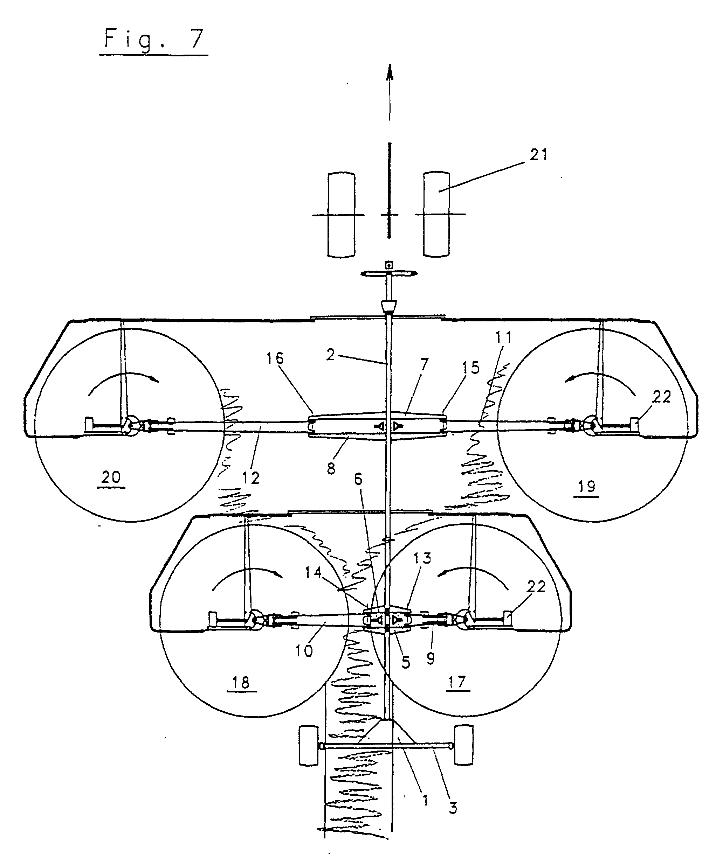

- Fig. 7: einen gezogenen Schwader mit vier paarweise gegenläufigen Schwadkreiseln zur Bildung eines übergroßen Mittenschwades, und
- Fig. 8: einen Schwader nach Fig. 7 mit einem Tandemfahrwerk

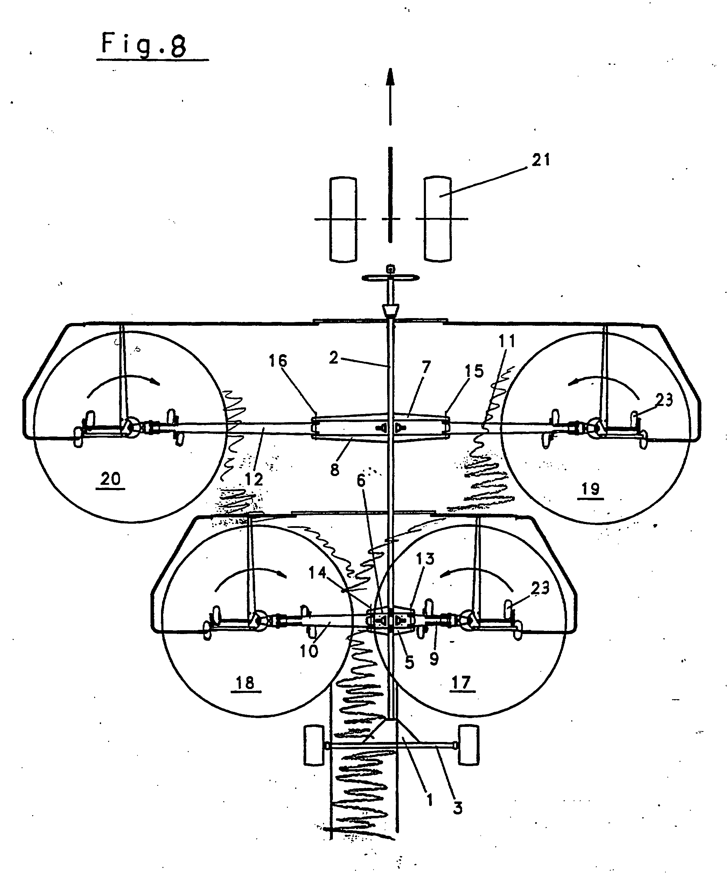

Mit (1) ist das Fahrgestell eines gezogenen Kreiselschwaders bezeichnet, das aus einem gleichzeitig die Deichsel bildenden Längsholm (2), einer Laufachse (3) und zwei richtungsverstellbaren Laufrädern (4) besteht. An dem Längsholm (2) sind Konsolen (5, 6, 7, 8) starr befestigt, in denen Tragarme (9, 10, 11, 12) über parallel zum Holm (2) verlaufende Schwenkachsen (13, 14, 15, 16) (über nicht dargestellte Stellmittel) hochschwenkbar gelagert sind. An den freien Enden der Tragarme sind angetriebene Schwadkreisel (17, 18, 19, 20) befestigt, deren Drehrichtung entsprechend den angegebenen Pfeilrichtungen veränderbar ist. Die Schwadkreisel stützten sich auf ein Fahrwerk mit zwei Stützrädern (22) ab. Die Stützräder (22) können für eine bessere Kurvengängigkeit der Maschine als Nachlaufräder gestaltet sein. Statt auf ein zweirädriges Fahrgestell können sich die Schwadkreisel auch auf ein an sich bekanntes, vierrädriges Tandemfahrwerk (23) mit Nachlaufrädern abstützen (Fig. 8).

## Patentansprüche

1. Kreiselschwader mit drei um etwa vertikale Achsen umlaufend angetriebenen Schwadkreiseln zur Bildung eines mittig zwischen zwei Schwadkreiseln abgelegten Großschwades oder mehrerer seitlich eines Schwadkreisels abgelegten Kleinschwaden, wobei - in Fahrtrichtung gesehen - zwei paarig nebeneinander angeordneten Schwadkreiseln gestaffelt ein dritter Schwadkreisel zugeordnet ist und wobei weiter die einzelnen Schwadkreisel durch Hochschwenken aus der Arbeitsstellung bringbar und an einem gezogenen Fahrgestell befestigt sind,
**dadurch gekennzeichnet,**
**dass** der dritte Schwadkreisel (19) den paarig nebeneinander angeordneten Schwadkreiseln (17, 18) seitlich ausladend in Fahrtrichtung vorgeordnet ist und die Schwadkreisel (17, 18, 19) an einem deichselbildenden Längsholm (2) angeordnet sind, wobei der deichselbildende Längsholm (2) von einem Fahrwerk (1) getragen wird.

2. Kreiselschwader nach Anspruch 1,
**dadurch gekennzeichnet,**
**dass** dem dritten Schwadkreisel (19) spiegelbildlich seitlich etwa gleich ausladend ein vierter Schwadkreisel (20) nebengeordnet ist.

3. Kreiselschwader nach den Ansprüchen 1 und 2 in gezogener Ausführung mit einem Laufräder aufweisenden Fahrgestell,
**dadurch gekennzeichnet,**
**dass** die Laufräder (4) in bekannter Weise richtungsverstellbar sind.

4. Kreiselschwader nach den Ansprüchen 1 bis 3,
**dadurch gekennzeichnet,**
**dass** die Schwadkreisel (17, 18, 19, 20) in bekannter Weise in ihrer Drehrichtung umkehrbar sind.

## Claims

1. A rotor windrower comprising three windrowing rotors which are driven in rotation about substantially vertical axes for forming a large windrow deposited centrally between two windrowing rotors or a plurality of small windrows which are deposited laterally of a windrowing rotor, wherein - viewed in the direction of travel - a third windrowing rotor is arranged in staggered relationship with two windrowing rotors which are arranged as a pair side-by-side and wherein moreover the individual windrowing rotors can be moved out of the operating position by upward pivotal movement and are fixed to a drawn chassis, **characterised in that** the third windrowing rotor (19) is arranged in laterally projecting relationship in the direction of travel in front of the windrowing rotors (17, 18) arranged in a pair side-by-side and the windrowing rotors (17, 18, 19) are arranged on a towbar-forming longitudinal frame member (2), wherein the towbar-forming longitudinal frame member (2) is carried by a chassis arrangement (1).

2. A rotor windrower according to claim 1 **characterised in that** a fourth windrowing rotor (20) is arranged beside the third windrowing rotor (19) in mirror-image relationship in laterally substantially equally projecting relationship.

3. A rotor windrower according to claims 1 and 2 in drawn form comprising a chassis having support wheels, **characterised in that** the support wheels (4) are directionally displaceable in known manner.

4. A rotor windrower according to claims 1 to 3 **characterised in that** the windrowing rotors (17, 18, 19, 20) are reversible in their direction of rotation in known manner.

## Revendications

1. Andaineuse rotative comportant trois disques d'andaineuse qui sont entraînés en rotation autour d'axes sensiblement verticaux, aux fins de former un gros andain déposé au milieu, entre deux disques d'andaineuse, ou plusieurs petits andains déposés sur le côté d'un disque d'andaineuse, dans laquelle, vu dans la direction de déplacement, un troisième disque d'andaineuse décalé est associé à deux disques d'andaineuse disposés côte à côte par paire et dans laquelle les différents disques d'andaineuse sont montés sur un châssis tracté avec possibilité de relevage depuis la position de travail, **caractérisée en ce que** le troisième disque d'andaineuse (19), vu dans la direction de déplacement, est placé devant les deux disques d'andaineuse disposés côte à côte par paire, en porte-à-faux sur le côté, et **en ce que** les disques d'andaineuse (17, 18, 19) sont disposés sur un longeron (2) formant timon, le longeron (2) formant timon étant supporté par un châssis roulant (1).

2. Andaineuse rotative selon la revendication 1, **caractérisée en ce qu'**au troisième disque d'andaineuse (19) est associé un quatrième disque d'andaineuse (20) disposé symétriquement sur le côté, avec sensiblement le même porte-à-faux.

3. Andaineuse rotative selon les revendications 1 et 2 de type tractée comportant un châssis roulant, **caractérisée en ce que**, de manière connue, les roues (4) sont orientables.

4. Andaineuse rotative selon les revendications 1 à 3, **caractérisée en ce que**, de manière connue, le sens de rotation des disques d'andaineuse peut être inversé.
